# EUROPEAN PATENT SPECIFICATION

(11) **EP 3 984 773 B1**
(45) Date of publication and mention of the grant of the patent: **20.12.2023**
(21) Application number: 20821847.9
(22) Date of filing: 18.03.2020
(51) Int. Cl.: B60C 11/01, B60C 11/03, B60C 11/04, B60C 11/12

(54) **TIRE**
REIFEN
PNEUMATIQUE

(30) Priority: 11.06.2019 JP 2019108372
(43) Date of publication of application: 20.04.2022
(73) Proprietor: BRIDGESTONE CORPORATION, Chuo-ku Tokyo 104-8340 (JP)
(72) Inventor: SAHASHI, Kohei, Tokyo 104-8340 (JP)
(74) Representative: Marks & Clerk LLP
(86) International application number: PCT/JP2020/012012
(87) International publication number: WO 2020/250533

(56) References cited:
- WO-A1-2010/140524
- WO-A1-2013/018800
- JP-A- 2009 298 184
- JP-A- 2010 155 576
- JP-A- 2015 209 048
- JP-A- 2015 209 048
- JP-A- 2017 087 677
- JP-A- 2017 206 115
- JP-A- 2018 177 185

## Description

### [Technical Field]

The present invention relates to a tire.

Priority is claimed on Japanese Patent Application No. 2019-108372, filed on June 11, 2019.

### [Background Art]

In the related art, for example, as shown in Patent Document 1 below, a tire is known, in which a plurality of buffer recessed portions compression-deformable in a tire radial direction are arranged in a tire circumferential direction on an outer surface of a buttress portion connected to an end portion of the tread surface portion in a tire width direction over the entire area in the tire circumferential direction, and a valley line portion extending in the tire circumferential direction and a ridge line portion extending from the valley line portion in the tire circumferential direction are formed in a central portion of the buffer recessed portion in the tire radial direction. In this tire, when vibration is input from a road surface through the tread surface portion during traveling, the input vibration can be damped by deforming the buffer recessed portion in the tire radial direction. Attention is also drawn to the disclosures of JP2015-209048A and JP2010-155576A, wherein JP2015-209048A is showing the features of the preamble of claim 1.

### [Citation List]

### [Patent Document]

[Patent Document 1]
Japanese Unexamined Patent Application, First Publication No. 2019-1277

### [Summary of Invention]

### [Technical Problem]

However, in the tire of the related art, a buttress portion is repeatedly bent along a valley line portion and a ridge line portion due to input vibration from a road surface, and thus, an outer surface of the buttress portion may have cracks extending in the tire circumferential direction through a central portion of the buffer recessed portion in the tire radial direction.

The present invention is made in view of the above-mentioned circumstances, and an object thereof is to provide a tire capable of attenuating vibration input from the road surface through the tread surface portion during traveling, and preventing cracks extending in the tire circumferential direction from occurring on the outer surface of the buttress portion.

### [Solution to Problem]

According to an aspect of the present invention, there is provided a tire as claimed in claim 1.

### [Advantageous Effects of Invention]

According to the present invention, it is possible to attenuate vibration input from a road surface through a tread surface portion during traveling and prevent cracks extending in a tire circumferential direction from occurring on an outer surface of a buttress portion.

### [Brief Description of Drawings]

Fig. 1 is a cross-sectional view of a tire according to an embodiment of the present invention along a tire width direction.
Fig. 2 is a developed view of a tread surface portion and a buttress portion of the tire shown in Fig. 1.

### [Description of Embodiments]

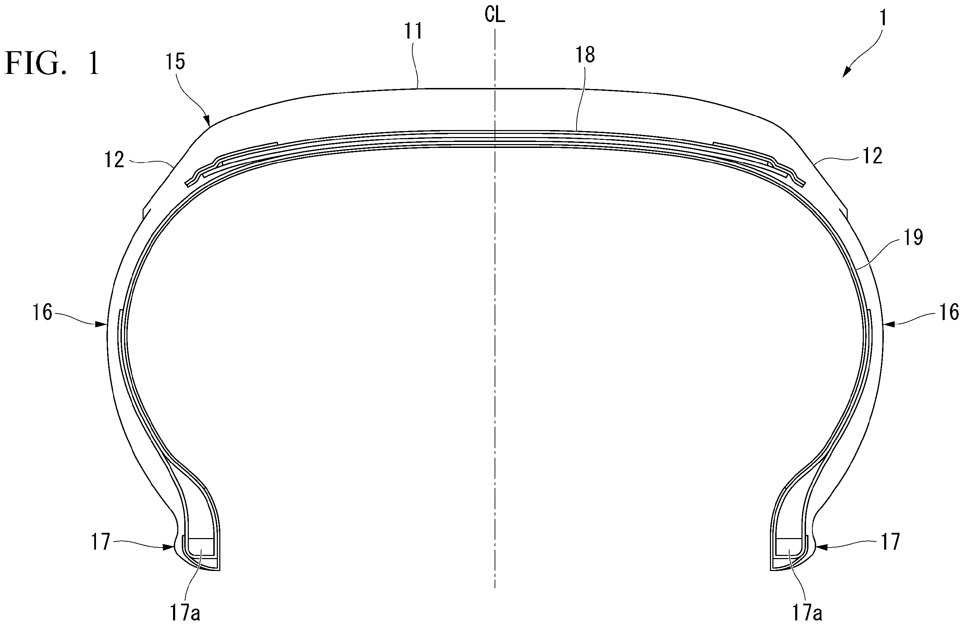

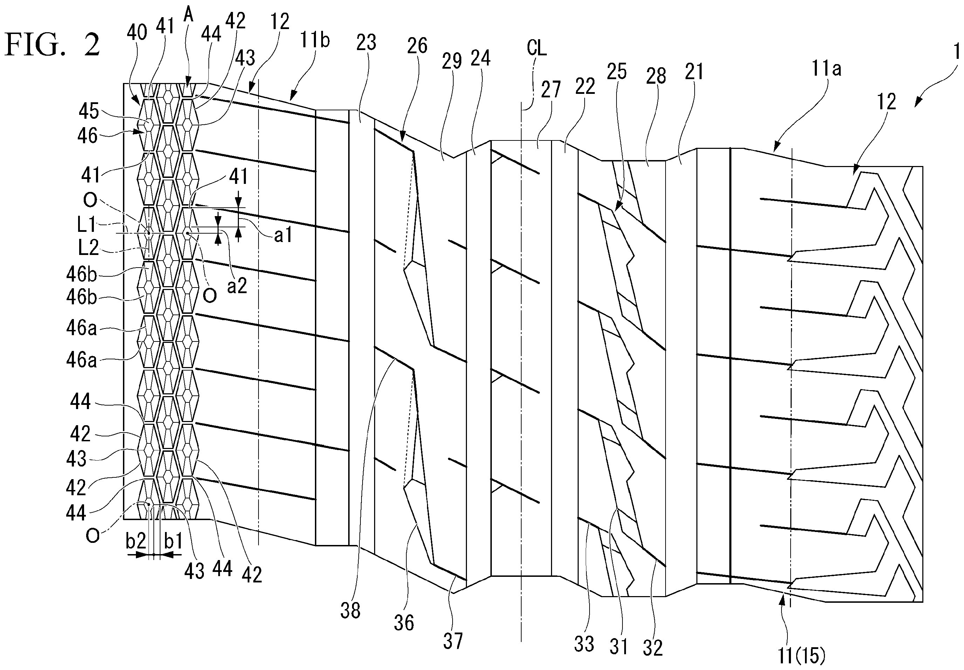

Hereinafter, a tire 1 according to an embodiment of the present invention will be described with reference to Figs. 1 and 2.

The tire 1 includes a tread section 15 located at an outer end portion in a tire radial direction, a pair of sidewall portions 16 extending inward in the tire radial direction from both end portions of the tread section 15 in a tire width direction, a pair of buttress portions 12 that connects the tread section 15 and the sidewall portions 16 to each other, and a bead portion 17 connected to an inner end portion of the sidewall portion 16 in the tire radial direction. A bead core 17a is embedded in the bead portion 17. A belt 18 is embedded in the tread section 15. In the tread section 15, an outer peripheral surface facing the outer side in the tire radial direction is a tread surface portion 11. A carcass ply 19 is integrally embedded in the tread section 15, the buttress portions 12, the sidewall portions 16, and the bead portions 17.

The carcass ply 19 is folded around the bead core 17a.

An explicit portion (not shown) is formed on the outer surface of the tire 1 such that a mounting direction of the tire 1 in the tire width direction with respect to the vehicle can be specified. This explicit portion is formed on the outer surface of, for example, the sidewall portion 16 of the tire 1.

Here, the tread surface portion 11 refers to the ground contact surface of the tread section 15 in a state where a regular internal pressure and a regular load are applied to the tire 1. The buttress portion 12 has an outer surface that is connected to an outer end portion of the tread surface portion 11 in the tire width direction, and does not come into contact with a smooth road surface when the tire 1 is rotated in a state where the regular internal pressure and regular load are applied to the tire 1.

The regular internal pressure is an air pressure corresponding to a maximum load capacity in Year Book 2008 version of Japan Automobile Tire Association (JATMA), and the regular load is a load corresponding to a maximum load capacity when a single wheel of Year Book 2008 version of JATMA is applied. In countries other than Japan, the regular internal pressure is an air pressure corresponding to a maximum load (maximum load capacity) of a single wheel described in a standard described later, and the regular load is a maximum load (maximum load capacity) of a single wheel in an applicable size described in the standard described later. The standards are set by industrial standards that are valid in an area where the tire is produced or used. For example, in the United States, the standard is "The Tire and Rim Association Inc.'s Year Book", and in Europe, the standard is "The European Tire and Rim Technical Organization's Standards Manual".

Outer main grooves 21 and 22, inner main grooves 23 and 24, an outer resonator 25, and an inner resonator 26 are formed on the tread surface portion 11.

In Fig. 2, two-dot chain lines extending in the tire circumferential direction indicates an outer end edge of the tread surface portion 11 in the tire width direction.

The outer main grooves 21 and 22 extend continuously in the tire circumferential direction. Two outer main grooves 21 and 22 are formed in an outer tread surface portion 11a of the tread surface portion 11 located on an outer side of the vehicle along the tire width direction with respect to a tire equatorial portion CL at intervals in the tire width direction.

The inner main grooves 23 and 24 extend continuously in the tire circumferential direction. Two inner main grooves 23 and 24 are formed in an inner tread surface portion 1 1b of the tread surface portion 11 located on inner side of the vehicle along the tire width direction with respect to the tire equatorial portion CL at intervals in the tire width direction.

A central land portion 27 extends continuously in the tire circumferential direction, which is partitioned by the outer main groove 22 of the two outer main grooves 21 and 22 located on the inner side in the tire width direction, and the inner main groove 24 of the two inner main grooves 23 and 24 located on the inner side in the tire width direction. A central portion of the central land portion 27 in the tire width direction is located on the tire equatorial portion CL.

A plurality of the outer resonators 25 and a plurality of the inner resonators 26 are each formed in the tire circumferential direction on an outer land portion 28 partitioned by the two outer main grooves 21 and 22 and an inner land portion 29 partitioned by the two inner main grooves 23 and 24.

The outer resonator 25 includes a first vertical groove 31 which extends in the tire circumferential direction, and a first branch groove 32 and a second branch groove 33 which have an inner volume smaller than that of the first vertical groove 31, extend in the tire width direction in directions opposite to each other from both end portions of the first vertical groove 31 in the tire circumferential direction, and are each opened to the two outer main grooves 21 and 22.

The inner resonator 26 includes a second vertical groove 36 which extends in the tire circumferential direction, and a third branch groove 37 and a fourth branch groove 38 which have an inner volume smaller than that of the second vertical groove 36, extends in the tire width direction in directions opposite to each other from both end portions of the second vertical groove 36 in the tire circumferential direction, and are each opened to the two inner main grooves 23 and 24.

The outer resonators 25 and the inner resonators 26 are formed on the tread surface portion 11. Accordingly, during traveling, a portion of air flowing between the outer main grooves 21 and 22 and the inner main grooves 23 and 24 and the road surface is introduced into the first vertical groove 31 and the second vertical groove 36 through the first branch groove 32 or the second branch groove 33 and the third branch groove 37 or the fourth branch groove 38.

As a result, it possible to attenuate vibration of the air flowing between the outer main grooves 21 and 22 and the inner main grooves 23 and 24 and the road surface, and it is possible to suppress occurrence of air column resonance.

Further, in the present embodiment, a plurality of buffer recessed portions 40 compression-deformable in the tire radial direction are arranged on an outer surface of the buttress portion 12 along the tire circumferential direction over the entire area in the tire circumferential direction.

The buffer recessed portion 40 is provided in the buttress portion 12 on the inner side of the vehicle in the pair of buttress portions 12. The buffer recessed portion 40 may be provided in the buttress portion 12 on the outer side of the vehicle in the pair of buttress portions 12, or may be provided in both of the pair of buttress portions 12.

In a plan view of the buttress portion 12, an opening peripheral edge of the buffer recessed portion 40 has a hexagonal shape including two first side portions (opposite side portions) 41, four second side portions 42, two first corner portions 43, and four second corner portions 44.

Hereinafter, a centroid of this hexagonal shape is referred to as a center O of the buffer recessed portion 40.

The first side portions 41 are located at both ends of the buffer recessed portion 40 in the tire circumferential direction and extend in the tire radial direction. The buffer recessed portions 40 adjacent to each other in the tire circumferential direction are arranged such that the first side portions 41 thereof face each other in the tire circumferential direction.

The second side portion 42 is longer than the first side portion 41. As a result, in a plan view of the buttress portion 12, in the two first side portions 41 and the four second side portions 42 included in the opening peripheral edge of the buffer recessed portion 40, a length of the first side portion 41 facing another buffer recessed portion 40 in the tire circumferential direction is shorter than a length of the second side portion 42.

The second side portions 42 extend from both ends of the first side portion 41 in a direction in which the second side portions are separated from each other in the tire radial direction toward the central portion of the buffer recessed portion 40 in the tire circumferential direction. A size of the buffer recessed portion 40 in the tire radial direction increases from both end portions in the tire circumferential direction toward the central portion in the tire circumferential direction. The buffer recessed portion 40 is formed in a horizontally long shape in which the size in the tire circumferential direction is larger than the size in the tire radial direction. In the four second side portions 42, in a plan view of the buttress portion 12, the pair of second side portions 42 facing each other across the center O of the buffer recessed portion 40 in a direction inclined with respect to both directions in the tire radial direction and the tire circumferential direction is parallel to each other.

The first corner portion 43 is defined by two second side portions 42 connected around the center O of the buffer recessed portion 40, and is located at the central portion of the buffer recessed portion 40 in the tire circumferential direction. The second corner portion 44 is defined by the first side portion 41 and the second side portion 42 which are continuous around the center O of the buffer recessed portion 40, and an angle of the second corner portion 44 is smaller than that of the first corner portion 43.

From the above, in a plan view of the buttress portion 12, the buffer recessed portion 40 has a hexagonal shape including the first side portions 41 extending in the tire radial direction at both end portions in the tire circumferential direction and the first corner portions 43 which point outward in the tire radial direction at the central portion in the tire circumferential direction.

In a plan view of the buttress portion 12, a gap in the tire circumferential direction between the buffer recessed portions 40 adjacent to each other in the tire circumferential direction is smaller than a minimum value of a distance between the center O of the buffer recessed portion 40 and the opening peripheral edge of the buffer recessed portion 40. In the shown example, in the opening peripheral edge of the buffer recessed portion 40, a portion where a distance from the center O of the buffer recessed portion 40 is the smallest in a plan view is the first corner portion 43.

In a plan view of the buttress portion 12, the buffer recessed portion 40 has a symmetrical shape with respect to both of a first reference line L1 which passes through the central portion of the buffer recessed portion 40 in the tire circumferential direction and extends in the tire radial direction and a second reference line L2 which passes through the central portion of the buffer recessed portion 40 in the tire radial direction and extends in the tire circumferential direction. The first reference line L1 and the second reference line L2 intersect at the center O of the buffer recessed portion 40.

In a plan view of the buttress portion 12, the buffer recessed portion 40 may have a symmetrical shape with respect to any one of the first reference line L1 and the second reference line L2 or the buffer recessed portion 40 may have an unsymmetrical shape with respect to both of the first reference line L1 and the second reference line L2.

An inner surface of the buffer recessed portion 40 includes a bottom surface 45 facing in the tire width direction, and a side surface 46 which rises from an outer peripheral edge of the bottom surface 45 and is connected to the opening peripheral edge of the buffer recessed portion 40. In a plan view of the buttress portion 12, the bottom surface 45 and the side surface 46 are arranged coaxially with the center O of the buffer recessed portion 40.

The buffer recessed portion 40 may be formed in a cone shape having no bottom surface 45, or the centers of the bottom surface 45 and the side surface 46 may be displaced from the center O of the buffer recessed portion 40 in a plan view of the buttress portion 12.

In a plan view of the buttress portion 12, a distance a1 between the first side portion 41 of the opening peripheral edge of the buffer recessed portion 40 and the outer peripheral edge of the bottom surface 45 in the tire circumferential direction is larger than a distance a2 between the center O of the buffer recessed portion 40 and the outer peripheral edge of the bottom surface 45 in the tire circumferential direction. The distance a1 may be set to the distance a2 or less.

In a plan view of the buttress portion 12, a distance b1 between the first corner portion 43 of the opening peripheral edge of the buffer recessed portion 40 and the outer peripheral edge of the bottom surface 45 in the tire radial direction is larger than a distance b2 between the center O of the buffer recessed portion 40 and the outer peripheral edge of the bottom surface 45 in the tire radial direction. The distance b1 may be set to the distance b2 or less.

In a plan view of the buttress portion 12, the distance a1 between the first side portion 41 and the outer peripheral edge of the bottom surface 45 in the tire circumferential direction is larger than the distance b1 between the first corner portion 43 and the outer peripheral edge of the bottom surface 45 in the tire radial direction. The distance a1 may be set to the distance b1 or less.

In a plan view of the buttress portion 12, the bottom surface 45 of the buffer recessed portion 40 has a hexagonal shape arranged in the same direction as the opening peripheral edge of the buffer recessed portion 40. The side surface 46 of the buffer recessed portion 40 includes six partitioned surfaces 46b connected via valley line portions 46a around the center O of the buffer recessed portion 40 in a plan view of the buttress portion 12. Each valley line portion 46a connects the first corner portion 43 or the second corner portion 44 facing each other in a plan view of the buttress portion 12 to one corner portion forming the outer peripheral edge of the bottom surface 45. The partitioned surface 46b connects the first side portion 41 or the second side portion 42 to one line portion forming the outer peripheral edge of the bottom surface 45.

From the above, the buffer recessed portion 40 has a hexagonal frustum shape.

Three or more buffer recessed portion rows A each formed of the plurality of buffer recessed portions 40 arranged along the tire circumferential direction are formed on the outer surface of the buttress portion 12. In the shown example, three buffer recessed portion rows A are formed on the outer surface of the buttress portion 12. In addition, less than three buffer recessed portion rows A may be formed on the outer surface of the buttress portion 12.

In one buffer recessed portion row A, the center O of each buffer recessed portion 40 is located at the same position in the tire radial direction.

The buffer recessed portion rows A adjacent to each other in the tire radial direction are arranged so as to be offset in the tire circumferential direction by less than a size of the buffer recessed portion 40 in the tire circumferential direction. In the shown example, the buffer recessed portion rows A adjacent to each other in the tire radial direction are arranged so as to be offset in the tire circumferential direction by half the size of the buffer recessed portion 40 in the tire circumferential direction.

The buffer recessed portion rows A adjacent to each other in the tire radial direction are arranged so as to be offset in the tire radial direction by less than a size of the buffer recessed portion 40 in the tire radial direction. In the shown example, the buffer recessed portion rows A adjacent to each other in the tire radial direction are arranged so as to be offset by more than half the size of the buffer recessed portion 40 in the tire radial direction.

Moreover, in the buffer recessed portion rows A adjacent to each other in the tire radial direction, an inner end portion of the buffer recessed portion 40 in the tire radial direction located on the outer side in the tire radial direction is located on the inner side in the tire radial direction from an outer end portion in the tire radial direction of the buffer recessed portion 40 located on the inner side in the tire radial direction. That is, in the buffer recessed portion rows A adjacent to each other in the tire radial direction, the first corner portion 43 of the buffer recessed portion 40 of one buffer recessed portion row A is arranged so as to bite into the tire radial direction and mesh with each other in the tire circumferential direction with respect to a band-shaped arrangement region of the other buffer recessed portion row A that extends continuously over the entire area in the tire circumferential direction.

The buffer recessed portions 40 adjacent to each other in the tire radial direction are arranged such that one of the second side portions 42 of the buffer recessed portions 40 faces parallel to each other. A gap between the second side portions 42 is equivalent to the gap between the buffer recessed portions 40 in the tire circumferential direction adjacent to each other in the tire circumferential direction.

When the size of the buffer recessed portion row A in the tire radial direction is represented by H, the size of the buffer recessed portion row A in the tire circumferential direction at the central portion in the tire radial direction is represented by S, an opening area of the buffer recessed portion 40 is represented by X, a total inner volume of the plurality of buffer recessed portions 40 is represented by V, a depth of the buffer recessed portion 40 is represented by D, and the number of buffer recessed portions 40 is represented by N, 0.4 ≤ X/(H·S) ≤ 1.3, 150 ≤ (N·X)/(H·S) ≤ 600, and H·S·D/2 ≤ V are satisfied.

As described above, according to the tire 1 of the present embodiment, since the plurality of buffer recessed portions 40 are formed on the outer surface of the buttress portion 12, when vibration is input from the road surface through the tread surface portion 11 during traveling, it is possible to attenuate the input vibration by deforming the buffer recessed portions 40 in the tire radial direction.

In particular, in a plan view of the buttress portion 12, the opening peripheral edge of the buffer recessed portion 40 has a hexagonal shape, and the buffer recessed portions 40 adjacent to each other in the tire circumferential direction are arranged such that the first side portions 41 thereof face each other in the tire circumferential direction. As a result, in a plan view, the first side portion 41, the second side portion 42, and the hexagonal diagonal lines formed by the side portions 41 and 42 do not coincide with a line extending along the tire circumferential direction. Accordingly, it is possible to make it difficult for the buffer recessed portion 40 to have a line portion that coincides with the line extending in the tire circumferential direction, that is, a folding line portion that is repeatedly bent by the input vibration from the road surface, and it is possible to suppress formation of cracks extending in the tire circumferential direction in the buffer recessed portion row A.

Since the buffer recessed portion 40 is formed in a horizontally long shape, the buffer recessed portion 40 can be easily deformed in the tire radial direction at the time of vibration input.

In a plan view of the buttress portion 12, in the two first side portions 41 and the four second side portions 42 included in the opening peripheral edge of the buffer recessed portion 40, the length of the first side portion 41 facing another buffer recessed portion 40 in the tire circumferential direction is shorter than the length of the second side portion 42. Accordingly, the buffer recessed portion 40 can be easily deformed in the tire radial direction at the time of vibration input.

In a plan view of the buttress portion 12, the distance a1 between the first side portion 41 of the opening peripheral edge of the buffer recessed portion 40 and the outer peripheral edge of the bottom surface 45 in the tire circumferential direction is larger than the distance a2 between the center O of the buffer recessed portion 40 and the outer peripheral edge of the bottom surface 45 in the tire circumferential direction. Accordingly, the portions of the side surface 46 located on both sides sandwiching the bottom surface 45 in the tire circumferential direction can be easily deformed at the time of vibration input.

In a plan view of the buttress portion 12, the distance b1 between the first corner portion 43 of the opening peripheral edge of the buffer recessed portion 40 and the outer peripheral edge of the bottom surface 45 in the tire radial direction is larger than the distance b2 between the center O of the buffer recessed portion 40 and the outer peripheral edge of the bottom surface 45 in the tire radial direction. Accordingly, the portions of the side surface 46 located on both sides sandwiching the bottom surface 45 in the tire radial direction are likely to be deformed in the tire radial direction around the outer peripheral edge of the bottom surface 45, and the buffer recessed portion 40 can be easily deformed in the tire radial direction at the time of vibration input.

In a plan view of the buttress portion 12, the gap in the tire circumferential direction between the buffer recessed portions 40 adjacent to each other in the tire circumferential direction is smaller than the minimum value of the distance between the center O of the buffer recessed portion 40 and the opening peripheral edge of the buffer recessed portion 40. Accordingly, it is possible to prevent the distance between the buffer recessed portions 40 adjacent to each other in the tire circumferential direction from becoming long, and it is possible to reliably attenuate the input vibration.

Since three or more buffer recessed portion rows A are formed on the outer surface of the buttress portion 12, vibration input from the road surface via the tread surface portion 11 can be reliably attenuated during traveling.

In a plan view of the buttress portion 12, the buffer recessed portion 40 having a hexagonal shape exhibits a symmetrical shape with respect to both the first reference line L1 and the second reference line L2. Accordingly, from the buffer recessed portion 40, it is possible to remove the line portion that coincides with the line extending in the tire circumferential direction, including the diagonal line, and reliably suppresses occurrence of cracks extending in the tire circumferential direction in the buffer recessed portion row A.

In a plan view of the buttress portion 12, the buffer recessed portion 40 has the above-mentioned symmetrical shape. Accordingly, it is possible to stabilize a shape when the buffer recessed portion 40 is deformed in the tire radial direction at the time of vibration input and stably exhibit damping performance.

A technical scope of the present invention is not limited to the above-described embodiment, and various modifications can be made without departing from a scope of the present invention defined in the claims.

The buffer recessed portion 40 may be formed in a vertically long shape in which the size in the tire circumferential direction is shorter than the size in the tire radial direction, and the size of the buffer recessed portion 40 in the tire circumferential direction may be equal to the size of the buffer recessed portion 40 in the tire radial direction.

In the above embodiment, in a plan view of the buttress portion 12, the buffer recessed portion 40 has a hexagonal shape in which the bottom surface 45 of the buffer recessed portion 40 is arranged in the same orientation as the opening peripheral edge of the buffer recessed portion 40. However, the bottom surface 45 of the buffer recessed portion 40 may be arranged in a different orientation as the opening peripheral edge of the buffer recessed portion 40 and the shape of the bottom surface 45 in a plan view may be different from the shape of the opening peripheral edge of the buffer recessed portion 40 in a plan view.

In the above embodiment, the side surface 46 of the buffer recessed portion 40 is configured to include the valley line portion 46a and the partitioned surface 46b. However, for example, the side surface 46 may be configured to have a smooth peripheral surface that continuously extends around the center O of the buffer recessed portion 40.

The tread pattern formed on the tread surface portion 11 is not limited to the above embodiment, and may be appropriately changed.

In addition, it is possible to replace the components in the above-described embodiment with well-known components as appropriate without departing from the scope of the present invention defined in the claims, and the above-described embodiments and modifications may be appropriately combined.

In the present invention, since the plurality of buffer recessed portions are formed on the outer surface of the buttress portion, when vibration is input from the road surface through the tread surface portion during traveling, it is possible to attenuate the input vibration by deforming the buffer recessed portions in the tire radial direction.

In particular, in a plan view of the buttress portion, the opening peripheral edge of the buffer recessed portion has a hexagonal shape including six side portions, and the buffer recessed portions adjacent to each other in the tire circumferential direction are arranged such that one of the six side portions of one of the buffer recessed portions faces one of the six side portions of the other of the buffer recessed portions in the tire circumferential direction. As a result, in a plan view, the six side portions and the hexagonal diagonal line formed by the side portions do not coincide with the line extending along the tire circumferential direction. Accordingly, it is possible to make it difficult for the buffer recessed portion to have a line portion that coincides with the line extending in the tire circumferential direction, that is, a folding line portion that is repeatedly bent by the input vibration from the road surface, and it is possible to suppress formation of cracks extending in the tire circumferential direction in the buffer recessed portion row each formed of the plurality of buffer recessed portions arranged in the tire circumferential direction.

Here, the buffer recessed portion may be formed in a horizontally long shape in which the size in the tire circumferential direction is larger than the size in the tire radial direction.

In this case, since the buffer recessed portion is formed in a horizontally long shape, the buffer recessed portion can be easily deformed in the tire radial direction at the time of vibration input.

Further, in the six side portions, the length of the facing side portion facing the other buffer recessed portion in the tire circumferential direction is shorter than the lengths of other side portions.

In this case, in the six side portions, since the length of the facing side portion facing the other buffer recessed portion in the tire circumferential direction is shorter than the lengths of other side portions, the buffer recessed portion can be easily deformed in the tire radial direction at the time of vibration input.

Further, the inner surface of the buffer recessed portion may include the bottom surface facing in the tire width direction, and the side surface which rises from an outer peripheral edge of the bottom surface and is connected to the opening peripheral edge of the buffer recessed portion, and in a plan view of the buttress portion, the distance between the opening peripheral edge of the buffer recessed portion and the outer peripheral edge of the bottom surface in the tire circumferential direction may be larger than the distance between the center of the bottom surface and the outer peripheral edge of the bottom surface in the tire circumferential direction.

In this case, in a plan view of the buttress portion, the distance between the opening peripheral edge of the buffer recessed portion and the outer peripheral edge of the bottom surface in the tire circumferential direction may be larger than the distance between the center of the bottom surface and the outer peripheral edge of the bottom surface in the tire circumferential direction. Accordingly, the portions of the side surface located on both sides sandwiching the bottom surface in the tire circumferential direction can be easily deformed at the time of vibration input.

Further, the inner surface of the buffer recessed portion may include the bottom surface facing in the tire width direction, and the side surface which rises from the outer peripheral edge of the bottom surface and is connected to the opening peripheral edge of the buffer recessed portion, and in a plan view of the buttress portion, the distance between the opening peripheral edge of the buffer recessed portion and the outer peripheral edge of the bottom surface in the tire radial direction may be larger than the distance between the center of the bottom surface and the outer peripheral edge of the bottom surface in the tire radial direction.

In this case, in a plan view of the buttress portion, the distance between the opening peripheral edge of the buffer recessed portion and the outer peripheral edge of the bottom surface in the tire radial direction may be larger than the distance between the center of the bottom surface and the outer peripheral edge of the bottom surface in the tire radial direction. Accordingly, the portions of the side surface located on both sides sandwiching the bottom surface in the tire radial direction are likely to be deformed in the tire radial direction around the outer peripheral edge of the bottom surface, and the buffer recessed portion can be easily deformed in the tire radial direction at the time of vibration input.

Further, in a plan view of the buttress portion, the gap in the tire circumferential direction between the buffer recessed portions adjacent to each other in the tire circumferential direction may be smaller than the minimum value of the distance between the center of the buffer recessed portion and the opening peripheral edge of the buffer recessed portion.

In this case, in a plan view of the buttress portion, the gap in the tire circumferential direction between the buffer recessed portions adjacent to each other in the tire circumferential direction may be smaller than the minimum value of the distance between the center of the buffer recessed portion and the opening peripheral edge of the buffer recessed portion. Accordingly, it is possible to prevent the distance between the buffer recessed portions adjacent to each other in the tire circumferential direction from becoming long, and it is possible to reliably attenuate the input vibration.

Further, three or more buffer recessed portion rows each formed of the plurality of buffer recessed portions arranged along the tire circumferential direction may be formed on the outer surface of the buttress portion.

In this case, since three or more buffer recessed portion rows are formed on the outer surface of the buttress portion, the vibration input from the road surface through the tread surface portion can be reliably attenuated during traveling.

Further, in a plan view of the buttress portion, the buffer recessed portion may have a symmetrical shape with respect to both of the first reference line which passes through the central portion of the buffer recessed portion in the tire circumferential direction and extends in the tire radial direction and the second reference line which passes through the central portion of the buffer recessed portion in the tire radial direction and extends in the tire circumferential direction.

In this case, in a plan view of the buttress portion, the buffer recessed portion having a hexagonal shape exhibits a symmetrical shape with respect to both the first reference line and the second reference line. Accordingly, from the buffer recessed portion, it is possible to remove the line portion that coincides with the line extending in the tire circumferential direction, including the diagonal line, and reliably suppresses occurrence of cracks extending in the tire circumferential direction in the buffer recessed portion row.

In a plan view of the buttress portion, the buffer recessed portion has the above-mentioned symmetrical shape. Accordingly, it is possible to stabilize a shape when the buffer recessed portion is deformed in the tire radial direction at the time of vibration input and stably exhibit damping performance.

### [Industrial Applicability]

By applying a tire of the present invention to a relevant field, it is possible to attenuate vibration input from a road surface through a tread surface portion during traveling and prevent cracks extending in a tire circumferential direction from occurring on an outer surface of a buttress portion.

### [Reference Signs List]

1: Tire
11: tread surface portion
12: Buttress portion
40: Buffer recessed portion
41: First side portion (opposite side portion)
42: Second side portion (another side portion)
45: Bottom surface
46: Side surface
A: Buffer recessed portion row
L 1: First reference line
L2: Second reference line
O: Center of buffer recessed portion (center of bottom surface)

## Claims

1. A tire (1) comprising:
a plurality of buffer recessed portions (40) compression-deformable in a tire radial direction that are arranged in a tire circumferential direction over an entire area in the tire circumferential direction on an outer surface of a buttress portion (12) connected to an end portion of a tread surface portion (11) in a tire width direction,
wherein in a plan view of the buttress portion (12), an opening peripheral edge of the buffer recessed portion (40) has a hexagonal shape including six side portions (41, 42), and the buffer recessed portions (40) adjacent to each other in the tire circumferential direction are arranged such that one of the six side portions (41, 42) of one of the buffer recessed portions (40) faces one of the six side portions (41, 42) of the other of the buffer recessed portions (40) in the tire circumferential direction,
**characterized in that**
in the six side portions (41, 42), a length of a facing side portion facing the other buffer recessed portion (40) in the tire circumferential direction is shorter than lengths of other side portions.

2. The tire (1) according to claim 1,
wherein the buffer recessed portion (40) is formed in a horizontally long shape in which a size in the tire circumferential direction is larger than a size in the tire radial direction.

3. The tire (1) according to claim 1 or 2,
wherein an inner surface of the buffer recessed portion (40) includes a bottom surface (45) facing in the tire width direction, and a side surface (46) which rises from an outer peripheral edge of the bottom surface (45) and is connected to the opening peripheral edge of the buffer recessed portion (40), and in a plan view of the buttress portion (12), a distance between the opening peripheral edge of the buffer recessed portion (40) and the outer peripheral edge of the bottom surface (45) in the tire circumferential direction is larger than a distance between a center of the bottom surface (45) and the outer peripheral edge of the bottom surface (45) in the tire circumferential direction.

4. The tire (1) according to any one of claims 1 to 3,
wherein an inner surface of the buffer recessed portion (40) includes a bottom surface (45) facing in the tire width direction, and a side surface (46) which rises from an outer peripheral edge of the bottom surface (45) and is connected to the opening peripheral edge of the buffer recessed portion (40), and
in a plan view of the buttress portion (12), a distance between the opening peripheral edge of the buffer recessed portion (40) and the outer peripheral edge of the bottom surface (45) in the tire radial direction is larger than a distance between a center of the bottom surface (45) and the outer peripheral edge of the bottom surface (45) in the tire radial direction.

5. The tire (1) according to any one of claims 1 to 4,
wherein in a plan view of the buttress portion (12), a gap in the tire circumferential direction between the buffer recessed portions (40) adjacent to each other in the tire circumferential direction is smaller than a minimum value of a distance between a center (O) of the buffer recessed portion (40) and the opening peripheral edge of the buffer recessed portion (40).

6. The tire (1) according to any one of claims 1 to 5,
wherein three or more buffer recessed portion rows (A) each formed of a plurality of the buffer recessed portions (40) arranged along the tire circumferential direction are formed on the outer surface of the buttress portion (12).

7. The tire (1) according to any one of claims 1 to 6,
wherein in a plan view of the buttress portion (12), the buffer recessed portion (40) has a symmetrical shape with respect to both of a first reference line (L1) which passes through a central portion of the buffer recessed portion (40) in the tire circumferential direction and extends in the tire radial direction and a second reference line (L2) which passes through a central portion of the buffer recessed portion (40) in the tire radial direction and extends in the tire circumferential direction.

## Patentansprüche

1. Reifen (1), der Folgendes umfasst:
eine Vielzahl von in einer Reifenradialrichtung druckverformbaren vertieften Pufferabschnitten (40), die in einer Reifenumfangsrichtung über einen gesamten Bereich in der Reifenumfangsrichtung auf einer Außenfläche eines Pfeilerabschnitts (12) angeordnet sind, der mit einem Endabschnitt eines Laufflächenabschnitts (11) in einer Reifenbreitenrichtung verbunden ist,
wobei in einer Draufsicht des Pfeilerabschnitts (12) eine Öffnungsumfangskante des vertieften Pufferabschnitts (40) eine sechseckige Form aufweist, die sechs Seitenabschnitte (41, 42) einschließt, und die zueinander in der Reifenumfangsrichtung benachbarten vertieften Pufferabschnitte (40) derart angeordnet sind, dass einer der sechs Seitenabschnitte (41, 42) des einen der vertieften Pufferabschnitte (40) einem der sechs Seitenabschnitte (41, 42) des anderen der vertieften Pufferabschnitte (40) in der Reifenumfangsrichtung gegenüberliegt,
**dadurch gekennzeichnet, dass**
in den sechs Seitenabschnitten (41, 42) eine Länge eines gegenüberliegenden Seitenabschnitts, der dem anderen vertieften Pufferabschnitt (40) in der Reifenumfangsrichtung gegenüberliegt, kürzer ist als Längen anderer Seitenabschnitte.

2. Reifen (1) nach Anspruch 1,
wobei der vertiefte Pufferabschnitt (40) in einer in Horizontalrichtung langen Gestalt geformt ist, in der eine Größe in der Reifenumfangsrichtung größer ist als eine Größe in der Reifenradialrichtung.

3. Reifen (1) nach Anspruch 1 oder 2,
wobei eine Innenfläche des vertieften Pufferabschnitts (40) eine untere Fläche (45), die in die Reifenbreitenrichtung weist, und eine Seitenfläche (46), die von einer äußeren Umfangskante der unteren Fläche (45) ansteigt und mit der Öffnungsumfangskante des vertieften Pufferabschnitts (40) verbunden ist, einschließt und in einer Draufsicht des Pfeilerabschnitts (12) ein Abstand zwischen der Öffnungsumfangskante des vertieften Pufferabschnitts (40) und der äußeren Umfangskante der unteren Fläche (45) in der Reifenumfangsrichtung größer ist als ein Abstand zwischen einer Mitte der unteren Fläche (45) und der äußeren Umfangskante der unteren Fläche (45) in der Reifenumfangsrichtung.

4. Reifen (1) nach einem der Ansprüche 1 bis 3,
wobei eine Innenfläche des vertieften Pufferabschnitts (40) eine untere Fläche (45), die in die Reifenbreitenrichtung weist, und eine Seitenfläche (46), die von einer äußeren Umfangskante der unteren Fläche (45) ansteigt und mit der Öffnungsumfangskante des vertieften Pufferabschnitts (40) verbunden ist, einschließt, und
in einer Draufsicht des Pfeilerabschnitts (12) ein Abstand zwischen der Öffnungsumfangskante des vertieften Pufferabschnitts (40) und der äußeren Umfangskante der unteren Fläche (45) in der Reifenradialrichtung größer ist als ein Abstand zwischen einer Mitte der unteren Fläche (45) und der äußeren Umfangskante der unteren Fläche (45) in der Reifenradialrichtung.

5. Reifen (1) nach einem der Ansprüche 1 bis 4,
wobei in einer Draufsicht des Pfeilerabschnitts (12) ein Spalt in der Reifenumfangsrichtung zwischen den in der Reifenumfangsrichtung zueinander benachbarten vertieften Pufferabschnitten (40) kleiner ist als ein minimaler Wert eines Abstandes zwischen einer Mitte (O) des vertieften Pufferabschnitts (40) und der Öffnungsumfangskante des vertieften Pufferabschnitts (40).

6. Reifen (1) nach einem der Ansprüche 1 bis 5,
wobei drei oder mehr Reihen (A) vertiefter Pufferabschnitte, die jeweils von einer Vielzahl der vertieften Pufferabschnitte (40), die entlang der Reifenumfangsrichtung angeordnet sind, gebildet werden, auf der Außenfläche des Pfeilerabschnitts (12) geformt sind.

7. Reifen (1) nach einem der Ansprüche 1 bis 6,
wobei in einer Draufsicht des Pfeilerabschnitts (12) der vertiefte Pufferabschnitt (40) eine symmetrische Form in Bezug auf sowohl eine erste Bezugslinie (L1), die durch einen mittleren Abschnitt des vertieften Pufferabschnitts (40) in der Reifenumfangsrichtung hindurchgeht und sich in der Reifenradialrichtung erstreckt, als auch eine zweite Bezugslinie (L2), die durch einen mittleren Abschnitt des vertieften Pufferabschnitts (40) in der Reifenradialrichtung hindurchgeht und sich in der Reifenumfangsrichtung erstreckt, aufweist.

## Revendications

1. Pneumatique (1), comprenant :
une pluralité de parties évidées d'amortissement (40) déformables par compression dans une direction radiale du pneumatique, qui sont agencées dans une direction circonférentielle du pneumatique, sur une zone entière, dans la direction circonférentielle du pneumatique, sur une surface externe d'une partie de contrefort (12) connectée à une partie d'extrémité d'une partie de surface de bande de roulement (11) dans une direction de la largeur du pneumatique,
dans lequel, dans une vue en plan de la partie de contrefort (12), un bord périphérique d'ouverture de la partie évidée d'amortissement (40) a une forme hexagonale incluant six parties latérales (41, 42), et les parties évidées d'amortissement (40) adjacentes les unes aux autres dans la direction circonférentielle du pneumatique sont agencées de sorte qu'une des six parties latérales (41, 42) d'une des parties évidées d'amortissement (40) fait face à une des six parties latérales (41, 42) de l'autre des parties évidées d'amortissement (40) dans la direction circonférentielle du pneumatique,
**caractérisé en ce que**
dans les six parties latérales (41, 42), une longueur d'une partie latérale opposée faisant face à l'autre partie évidée d'amortissement (40) dans la direction circonférentielle du pneumatique est plus courte que des longueurs d'autres parties latérales.

2. Pneumatique (1) selon la revendication 1,
dans lequel la partie évidée d'amortissement (40) est formée en une forme horizontalement longue, dans laquelle une dimension dans la direction circonférentielle du pneumatique est supérieure à une dimension dans la direction radiale du pneumatique.

3. Pneumatique (1) selon la revendication 1 ou 2,
dans lequel une surface interne de la partie évidée d'amortissement (40) inclut une surface inférieure (45) orientée dans la direction de la largeur du pneumatique, et une surface latérale (46) qui remonte à partir d'un bord périphérique externe de la surface inférieure (45) et est connectée au bord périphérique d'ouverture de la partie évidée d'amortissement (40) , et dans une vue en plan de la partie de contrefort (12), une distance entre le bord périphérique d'ouverture de la partie évidée d'amortissement (40) et le bord périphérique externe de la surface inférieure (45) dans la direction circonférentielle du pneumatique est supérieure à une distance entre un centre de la surface inférieure (45) et le bord périphérique externe de la surface inférieure (45) dans la direction circonférentielle du pneumatique.

4. Pneumatique (1) selon l'une quelconque des revendications 1 à 3,
dans lequel une surface interne de la surface évidée d'amortissement (40) inclut une surface inférieure (45) orientée dans la direction de la largeur du pneumatique, et une surface latérale (46) qui remonte à partir d'un bord périphérique externe de la surface inférieure (45) et est connectée au bord périphérique d'ouverture de la partie évidée d'amortissement (40), et
dans une vue en plan de la partie de contrefort (12), une distance entre le bord périphérique d'ouverture de la partie évidée d'amortissement (40) et le bord périphérique externe de la surface inférieure (45) dans la direction radiale du pneumatique est supérieure à une distance entre un centre de la surface inférieure (45) et le bord périphérique externe de la surface inférieure (45) dans la direction radiale du pneumatique.

5. Pneumatique (1) selon l'une quelconque des revendications 1 à 4,
dans lequel, dans une vue en plan de la partie de contrefort (12), un espace, dans la direction circonférentielle du pneumatique, entre les parties évidées d'amortissement (40) adjacentes les unes aux autres dans la direction circonférentielle du pneumatique est inférieure à une valeur minimale d'une distance entre un centre (O) de la partie évidée d'amortissement (40) et le bord périphérique d'ouverture de la partie évidée d'amortissement (40).

6. Pneumatique (1) selon l'une quelconque des revendications 1 à 5,
dans lequel trois rangées (A) de parties évidées d'amortissement ou plus, formées chacune à partir d'une pluralité des parties évidées d'amortissement (40) agencées le long de la direction circonférentielle du pneumatique, sont formées sur la surface externe de la partie de contrefort (12).

7. Pneumatique (1) selon l'une quelconque des revendications 1 à 6,
dans lequel, dans une vue en plan de la partie de contrefort (12), la partie évidée d'amortissement (40) a une forme symétrique par rapport à la fois à une première ligne de référence (L1) qui passe à travers une partie centrale de la partie évidée d'amortissement (40) dans la direction circonférentielle du pneumatique, et s'étend dans la direction radiale du pneumatique, et à une deuxième ligne de référence (L2) qui passe à travers une partie centrale de la partie évidée d'amortissement (40) dans la direction radiale du pneumatique et s'étend dans la direction circonférentielle du pneumatique.
